(19) Europäisches Patentamt
European Patent Office
Office européen des brevets

(11) **EP 3 373 033 A1**

(12) **EUROPEAN PATENT APPLICATION**

(43) Date of publication:
**12.09.2018 Bulletin 2018/37**

(51) Int Cl.:
**G01S 11/02** *(2010.01)*  **G01S 5/02** *(2010.01)*
**G01S 5/00** *(2006.01)*

(21) Application number: **17160453.1**

(22) Date of filing: **10.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Politecnico di Milano**
**20133 Milano (IT)**
(72) Inventors:
• SPAGNOLINI, Umberto
I-20100 Milano (IT)
• SAVAZZI, Stefano
I-20100 Milano (IT)
• RAMPA, Vittorio
I-20097 San Donato Milanese (MI) (IT)

(74) Representative: **Di Bernardo, Antonio**
**Thinx S.r.l.**
**Via Paleocapa, 7**
**20121 Milano (IT)**

(54) **MOTION DETECTION BY ANALYSIS OF DATA RELATING TO QUALITY CELLULAR SIGNAL**

(57) The present invention relates to a method and a related system for detecting the presence of people in a cellular wireless network. The method provides for measuring, by a user equipment, the power of broadcast signals transmitted from radio base stations of the network. For each radio base station a sequence of data indicating the cell signal quality is collected which correspond to, or depend on, the measured power of the broadcast signals. Sequences of data are compared, or processed, by means of statistical models for determining the presence of a person in proximity of the user equipment.

Fig.1

**Description**

**TECHNICAL FIELD**

The present invention relates to the field of position detection systems, and particularly to the detection of body movements in areas covered by radio signals.

Particularly the invention relates to a method according to the preamble of claim 1, and to a related detection system.

**PRIOR ART**

Several systems for detecting movement of bodies in areas under surveillance are currently known.

Most of the detection systems on the market use motion sensors, for example infrared, volumetric, ultrasonic sensors etc., in order to detect the movement within an area of interest. Such systems however require ad hoc devices (sensors) for the detection.

Some documents, such as the US patent application US2010/0026470, and international patent applications WO2012/082758 and WO2014004464, suggest to detect the presence of a person without the need of dedicated devices, by using the analysis of wireless signals reflected in a wireless network, such as Wi-Fi, or ZigBeee, or Wi-Max.

Generally the first experimental activities showing that body motions leave a characteristic footprint on the strength of the received radio signal (Received Signal Strength RSS) and that RSS fluctuations can be actually used to localize bodies are found in the article [1]. An approach, known as *Radio Tomography Imaging* (RTI) employs tomography methods to reconstruct an image of static objects [2] [3]. Methods introduced in [4] [5] allow the target position to be explicitly monitored by using a Bayesian approach [6] that processes together the RSS mean and standard deviations. More recently *device-free systems* (namely systems without detection devices) based on tracking RSS profiles were designed for 2D mapping of obstacles/ objects and the recognition of activities, which use SDR (Software-Defined Radio) devices [2] operating at 900 MHz, or RF frontend according to Wi-Fi standard.

All such systems however are suitable for detecting the movement of few people, at most one person, since they operate on a small land area, the area covered by wireless network.

**References**

[1] K. Woyach, D. Puccinelli, M. Haenggi, Sensorless Sensing in Wireless Networks: Implementation and Measurements. Proc. of 4th International Symposium on Modeling and Optimization in Mobile, Ad Hoc and Wireless Networks, pp.1-8, 3-6 Apr. 2006.

[2] S. Savazzi, S. Sigg, M. Nicoli, V. Rampa, S. Kianoush, U. Spagnolini, "Device-Free Radio Vision for assisted living: leveraging wireless channel quality information for human sensing," IEEE Signal Processing Magazine, vol. 33, no. 2, pp. 45-58, March 2016.

[3] N. Patwari, J. Wilson, RF sensor networks for Device-Free localization: measurements, models and algorithms. Proc. of the IEEE, Vol. 98, No. 11, Nov. 2010.

[4] M. Seifeldin, A. Saeed, A. Kosba, A. El-Keyi, M. Youssef, Nuzzer, A Large-Scale Device-Free Passive Localization System for Wireless Environments. IEEE Trans. Mobile Computing, Vol. 12, No. 7, pp.1321-1334, July 2013.

[5] A. Saeed, A.E. Kosba, M. Youssef, Ichnaea, A Low-Overhead Robust WLAN Device-Free Passive Localization System. IEEE J. Sel. Topics in Signal Proc., Vol.8, No.1, pp. 5-15, Feb. 2014.

[6] S. Savazzi, M. Nicoli, F. Carminati, M. Riva, A Bayesian approach to Device-Free Localization: modelling and experimental assessment. IEEE J. Sel. Topics in Signal Proc., Vol. 8, No. 1, pp. 16-29, Feb. 2014.

[7] Y. Mostofi, Cooperative wireless-based obstacle/object mapping and see-through capabilities in robotic networks. IEEE Trans. On Mobile Computing, Vol. 12, No. 5, May 2013.

[8] Y. Wang, J. Liu, Y. Chen, M. Gruteser, J. Yang, H. Liu, E-eyes: Device-free Location-oriented Activity Identification Using Fine-grained WiFi Signatures. Proc. of the 20th annual international conference on Mobile computing and networking, pp. 617-628, 2014.

[9] S. Sigg, M. Scholz, et al., RF-Sensing of Activities from Non-Cooperative Subjects in Device-Free Recognition Systems Using Ambient and Local Signals. IEEE Trans. on Mobile Computing, Vol.13, No.4, pp. 907-920, Apr. 2014.

[10] 3GPP TS 25.304: "Universal Mobile Telecommunication System: User Equipment (UE) procedures in idle mode and procedures for cell reselection in connected mode," Nov. 2011.

[11] 3GPP TS 36.304: "Evolved Universal Terrestrial Radio Access (EUTRA); User Equipment (UE) procedures in idle mode," (Release 8) Jan. 2016.

[12] K. E. Baddour, N. C. Beaulieu, "Autoregressive modeling for fading channel simulation," IEEE Trans. on Wireless Communications, vol. 4, no. 4, July 2005.

## OBJECTS AND SUMMARY OF THE INVENTION

It is the object of the present invention to overcome prior art drawbacks. Particularly it is the object of the present invention to provide a method for detecting the motion of a body within a cellular mobile radio network.

These and other objects of the present invention are achieved by a device embodying the characteristics of the annexed claims, which are an integral part of the present description.

In one embodiment the method for detecting the body motion in proximity of a user equipment in a wireless cellular network, particularly a WWAN (Wireless Wide Area Network), provides to receive, by a user equipment, broadcast signals transmitted from radio stations of the network and containing a cell identification code, CID. For each received broadcast signal, the user equipment measures the power of the received broadcast signal and calculates a CSQ parameter, indicating the quality of the received signal, corresponding to or derived from the power of the received broadcast signal. Therefore the method provides to collect, in sequences of data, the CSQ parameters calculated for the broadcast signals having the same CID. Then one or more of the collected data sequences are compared with one or more statistical models describing the trend over time of said data sequences, and, depending on the comparison, a parameter indicative of the presence of a person near the user equipment, or his/her motion is determined when the CSQ parameters change over time. Such solution therefore allows body motion near a user equipment to be detected in a cellular wireless network where, unlike Wi-Fi or ZigBee networks, the strength level of the base radio stations is set by the operator and is subjected to fluctuations related to operating choices, for example in order to force the re-selection of cells of user equipment.

In one embodiment, the user equipment transmits to a remote service center, outside the cellular wireless network, the CSQ parameters calculated for the received broadcast signals and the related cell identification codes. The remote service center collects the parameters and the cell identification codes transmitted from the user equipment in said data sequences and it determines the presence of a movement in the surrounding of the user equipment by comparing them with the stored models.

Such solution allows the movement to be detected also by user equipment having poor computational capacity.

In another embodiment the remote service center uses information from one or more user equipment to improve the ability in detecting the presence of movement and, possibly, to update the stored models.

Advantageously, in order to reduce energy consumptions and band loading, the user equipment sends parameters to the remote service center only when it detects a change over time of the CSQ parameters beyond a tolerance threshold. For example the user equipment:

(i) receives a first broadcast signal with a first identification code;
(ii) calculates a first parameter indicating the quality of the broadcast signal received with said first identification code and
(iii) compares the first parameter with an earlier parameter stored in a memory area of the user equipment, said earlier parameter being a parameter indicating the quality of a second broadcast signal received before said first broadcast signal and having same identification code;
(iv) transmits to the remote service center the first parameter indicating the quality of the first broadcast signal if the first parameter differs from the second parameter beyond a predetermined tolerance threshold.

In one embodiment, the CSQ parameter indicating the quality of a broadcast signal, calculated by the user equipment is a parameter that the user equipment calculates in order to implement a cell reselection procedure in said cellular wireless network.

Therefore such solution allows a parameter to be used which would be anyway calculated by the user equipment since it is required by the network, to implement a method detecting the movement of a user, with further advantages for energy consumptions of the user equipment.

Further characteristics and objects of the present invention will be more clear from the following description.

## BRIEF DESCRIPTION OF THE DRAWINGS

The invention will be described here below with reference to some examples provided by way of example and not as a limitation, and shown in the annexed drawings. These drawings show different aspects and embodiments of the present invention and, where appropriate, reference numerals showing like structures, components, materials and/or elements in different figures are denoted by like reference numerals.

Figure 1 is a system for detecting motions of a body in proximity of user equipment in a cellular wireless network.

Figure 2 is a flow chart of a method for detecting motions of a body in proximity of user equipment in a cellular wireless network;

Figure 3 is experimental results carried out with two base radio stations with CID =1280 and CID=3624. In details, figure 3(a) is CSQ measurements for the two cells during four consecutive days, while figure 3(b) is the function CUMSUM $g_k$ with T=240s.

Figure 4 (a) is three examples of anomalous CSQ data sequences extracted from the user equipment for occupancy conditions (upper figures) and non-occupancy conditions of environments; (b) is the corresponding deviations $V_{t_{B,m}:t_{A,m}}$. (c) the six-class histograms of CSQ normalized data.

## DETAILED DESCRIPTION OF THE INVENTION

While the invention is susceptible of various modifications and alternative constructions, some preferred embodiments are shown in the drawings and will be described in details herein below. It should be understood, however, that there is no intention to limit the invention to the specific disclosed embodiment but, on the contrary, the invention intends to cover all the modifications, alternative constructions and equivalents that fall within the scope of the invention as defined in the claims.

The use of "for example", "etc.", "or" denotes non-exclusive alternatives without limitation, unless otherwise noted. The use of "includes" means "includes, but not limited to", unless otherwise noted.

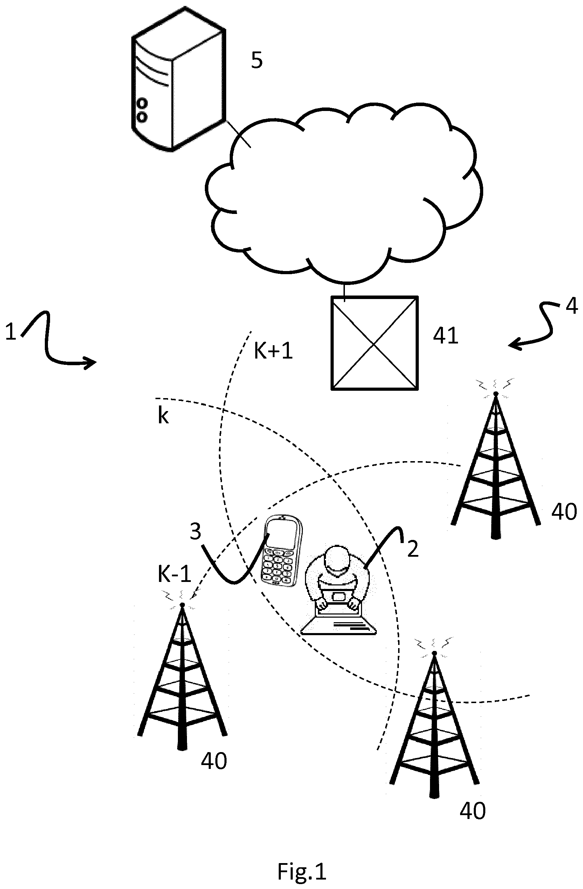

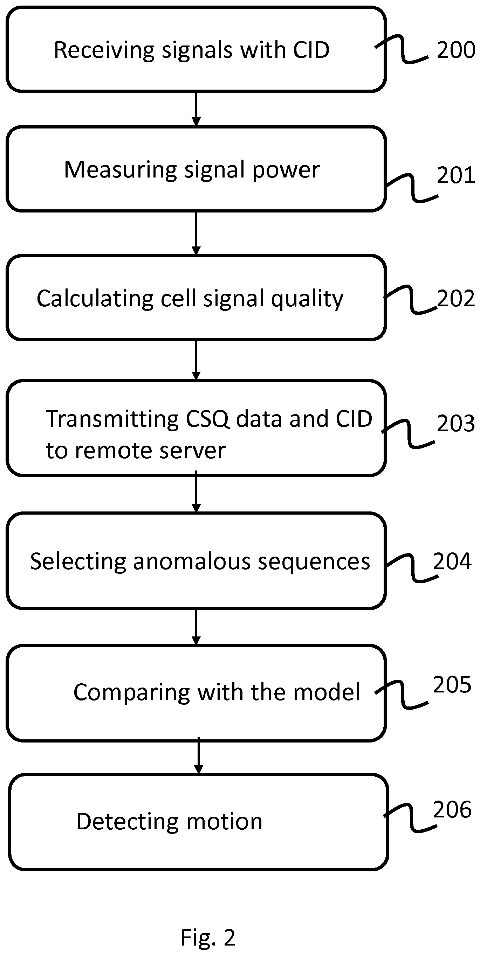

Figure 1 shows a system 1 for implementing a method for detecting body motions, for example a person 2, described below with reference to figure 2. The system comprises user equipment 3, for example a smartphone or a computer or another device, connected to a cellular wireless network 4, for example a UMTS or LTE network.

In the example of figure 1 the network 4 is a WWAN (Wireless Wide Area Network), particularly a UMTS network whose access network UTRAN is shown of which three radio stations are shown (Node-B in UMTS language) 40 that provide radio coverage in three cells k, k+1 and k-1, whose coverage limits are shown with a broken line. Node-B 40 are controlled by a Radio Network Controller (RNC) 41 in turn connected to the Core Network, not shown.

For the purposes of the present invention, however the type and structure of the cellular wireless network is not important and it will not be further disclosed in details.

In a manner known per se radio base stations 40 transmit broadcast signals comprising a cell identification code (CID) that is used by the user equipment 3 to calculate a parameter (called herein as CSQ) indicating the quality of the cell signal.

Generally in WWANs such parameters CSQ are calculated such to implement cell reselection procedures. For example in a UMTS network the user equipment (known as UE) estimates the power level of the received signal based on the RSCP (Received Signal Code Power) value that denotes the power measured by a receiver on a particular physical communication channel, typically the *Common Pilot Channel* (CPICH). The method used for selecting the cell is known as S criterion that uses the measured quality of cells $Q_{qualmeas}$ and the values of levels $Q_{rxlevmeas}$ measured by the cell receiver [10]. Such measurements are based on CPICH $Ec/I_0$ and on CPICH RSCP respectively. When connected, UE decodes the applicable SIB (System Information Block) values and it performs all the measurements of relevant signals, such to perform the cell reselection procedure.

In LTE networks the user equipment after scanning all RF channels of the bands of the access network E-UTRA to select the best network to connect to, implements a cell reselection procedure similar to the one used for UMTS networks, by using the S criterion and using both cell quality $Q_{qualmeas}$ and the measured level $Q_{rxlevmeas}$ of the cell receiver. However $Q_{qualmeas}$ and $Q_{rxlevmeas}$ are based on RSRP and RSRQ values respectively [11].

For the purposes of the present invention the method detecting the body movement provides generally the user equipment 3 to receive (step 200 in fig.2) broadcast signals each one bearing the identification code of the transmitter cell, and after calculating the power of the received signal (step 201), calculates (step 202) a CSQ parameter dependent on and deriving from the power of the received broadcast signal.

In the preferred embodiment described herein, the user equipment 3 is therefore arranged for transmitting (step 203) CSQ data and relevant CIDs to a remote service center 5, outside the network 4, where parameters necessary for motion detection are processed.

In a preferred embodiment, the user equipment fills a table of the type shown below, containing CID and CSQ data of a plurality of cells.

Table 1

| CSQ | CID |
| --- | --- |
| CSQ1 | CID1 |

(continued)

| CSQ | CID |
|------|------|
| CSQ3 | CID2 |
| CSQ3 | CID3 |

Table 1 contains for each k-th cell a CSQ value calculated by the user equipment 3 and the CID of the cell.

The transmission of CSQ and CID data from the user equipment 3 to the remote service center 5 can occur through the network 4 or through other data network to which the user equipment can connect. For example the user equipment 3 can be provided with a WiFi transreceiver and can transmit data to the remote service center 5 through the WiFi network.

The transmission of data to the remote service center preferably occurs periodically or as a response to anomalous events, such as a considerable perturbation (that is above a predetermined threshold) in the dynamics of the cell signal quality (CSQ).

In a particularly advantageous embodiment as regards energy consumptions, when the user equipment 3 receives a first broadcast signal with a first identification code, it calculates a first CSQ parameter indicating the quality of the broadcast signal received with said first identification code. Now the user equipment 3 compares the first parameter with an earlier parameter stored in a memory area of the user equipment 3, said earlier parameter being a parameter indicating the quality of a second broadcast signal received before said first broadcast signal and having same identification code. The user equipment 3 transmits to the remote service center 5 the first parameter indicating the quality of the first broadcast signal if the first parameter differs from the second parameter beyond a predetermined tolerance threshold.

The cell signal quality (CSQ) can be modelled by a autoregressive process of order p (see [12]) with parameters $\theta_{0,k} = [b_k, \sigma_k, r_k]$. By calling $s_{t,k}$ a discrete measurement of CSQ at time t (with discrete intervals $\Delta t$) for a CID-identified cell k, then the dynamics of CSQ can be described as the function of p measurements of previous CSQ $s_{t-1:t-p-1}$:

$$s_{t,k}\left(\theta_{0,k}\right) = b_k^T \times s_{t-1:t-p-1} + v_{t,k} + r_k . \qquad (1)$$

Where T is the duration of the observation, vector $b_k$ with dimension p x 1 contains the specific autoregressive parameters of the cell, the remainder $v_{t,k}$ serves for modeling the fluctuations with log-normal fading distribution of the strength of the connection, due to possible environmental changes, and $r_k$ describes the static component of CSQ measured by the user equipment 3 when connected to the cell k. Residual fluctuations $v_{t,k}$ are represented by a statistical Gaussian distribution with mean 0 and deviation $\sigma_k$.

The presence of a person in proximity of the user equipment 3 causes a change in the cell signal quality, that therefore is described by dynamics $s_t$ (namely a sequence of CSQ data) that instead of being described by the parameter $\theta_{0,k}$ is described by the unknown parameter $\theta_1$, generally independent from cell k.

In one embodiment, the process for detecting the motion of person occurs according to a two phase algorithm.

In a first phase the remote service center finds and extracts (step 204 in fig.2) time segments of 'anomalous' CSQ data that, diverging from the model valid for the empty environment can denote the presence of a body in proximity of the user equipment.

Therefore the extracted segments are classified and compared (step 205) with a model describing the trend over time of anomalous sequences due to motions of body in proximity of user equipment in the network 4. On the basis of the comparison changes of CSQ due to the presence of a body are distinguished (step 206) from other changes due to other events, such as cell reselection, environmental changes and resetting of network or cell parameters.

In one embodiment, in order to select time segments of 'anomalous' CSQ data a cumulative sum policy is used (CUMSUM). By calling T the minimum duration for detecting a change, the cumulative sum of the likelihood ratios gt is defined as

$$g_t = \frac{1}{T}\sum_{j=t-T}^{t}\left(\ell_j\right)^+ \qquad (2)$$

where $\ell_j$ are the terms of the likelihood ratios and $(\blacksquare)^+ = \max[0, \blacksquare]$ selects only the positive values, and it cancels the negative ones.

By the assumption that motions of a body in proximity of a user equipment cause small changes in the corre-

sponding parameters $\theta_{0,k}$ that describe the CSQ dynamics observed in an empty space, then the terms $\ell_j$ can be approximated as

$$\ell_j \approx \nu u_1^T \times z_j\left(\theta_{0,k}\right) \qquad (3)$$

where $v>0$ and $u_1$ is a unit vector indicating any previous information (if any) of the predominant direction of the change that gives a greater impact on perturbations of parameters of the model.

The function *score* (p+1)x1 is defined as

$$z_j\left(\theta_{0,k}\right) = \left[\frac{1}{\sigma_k^2}\, v_{j,k}\, s_{j-1;j-q}, \frac{1}{\sigma_k}\left(\frac{v_{t,k}^2}{\sigma_k^2} - 1\right)\right] \qquad (4)$$

Where for each user equipment connected to the cell k and with CSQ modelled as in (1), the innovation term $v_{j,k}$ is defined as

$$v_{j,k} = [1, -b_k^T] \times s_{j;j-q} - r_k \qquad (5)$$

Once fixing the detection threshold $h_0$, the start and end of the anomalous sequence are estimated as

$$t_A = min\{t : g_t \geq h_0\} \qquad (6)$$
$$t_B = min\{t > t_A + T : g_t \geq h_0\}$$

where $t_A$ is the start of the anomalous sequence and $t_B$ the end thereof.

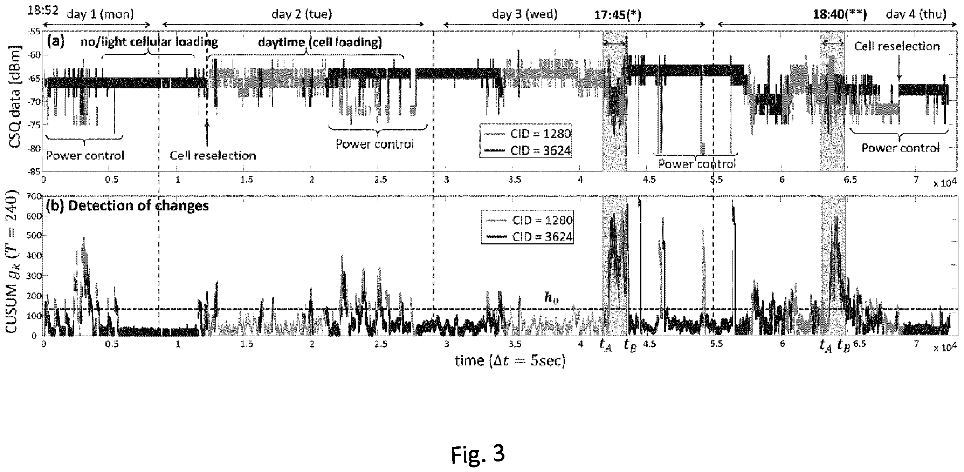

Figure 3 shows the experimental results carried out with two radio base stations with CID=1280 and CID=3624. In details, figure 3(a) shows CSQ measurements for the two cells during four consecutive days, while figure 3(b) shows the function CUMSUM gk with T=240s. As it can be noted, with no people, the CSQ values are substantially stable (the slight variation about -65dBm depends on the measurement sensitivity of the user equipment employed). Changes in CSQ occur with some power changes introduced by the network for controlling the power (power control) of radio stations and with the presence of a person in proximity of the user equipment, that is at 17:45 of day 3 (for a duration $[t_A,t_B]\approx$1h e 30m) and at 18:40 of day 4 (for a duration $[t_A,t_B]\approx$1h).

In the preferred embodiment in order to distinguish anomalous sequences of CSQ data due to the presence of bodies in proximity of the user equipment from anomalous sequences of CSQ data due to other factors, a model of the *bag-of-words* type is used.

In this embodiment, reference anomalous sequences of CSQ data are classified off-line (namely in absence of user equipment 3) in the form of vectors (that can be represented as histograms) whose elements represent the number of times when a given CSQ value is repeated in the sequence. Such reference sequences are stored in a database (the bag) of the model and used for comparing them, by a suitable metrics, with the anomalous ones selected and extracted from the remote server.

The reference sequences are independent from the specific user equipment or cell and are obtained from some examples of CSQ collected off-line, namely from one or more equipment connected to different cells before positioning the user equipment 3.

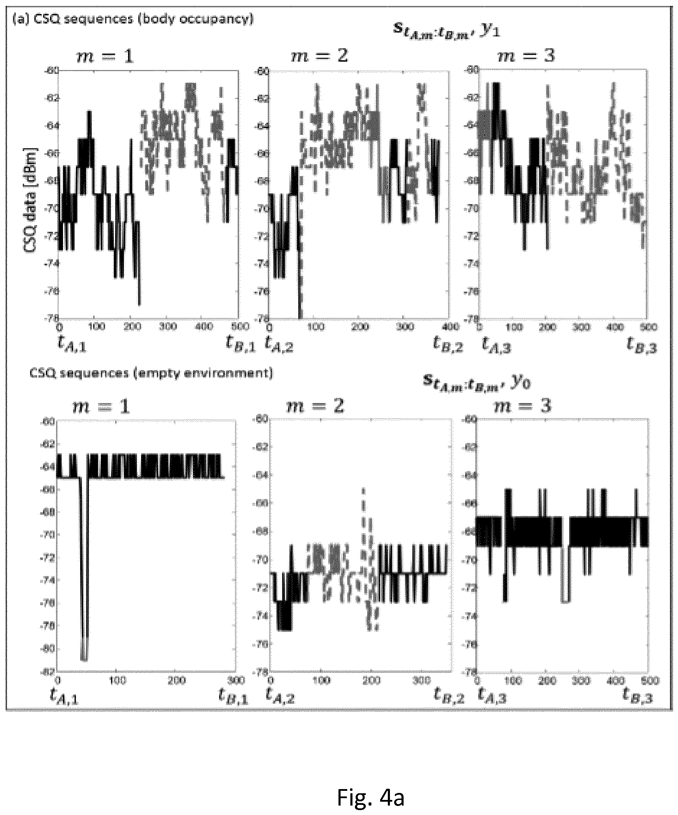

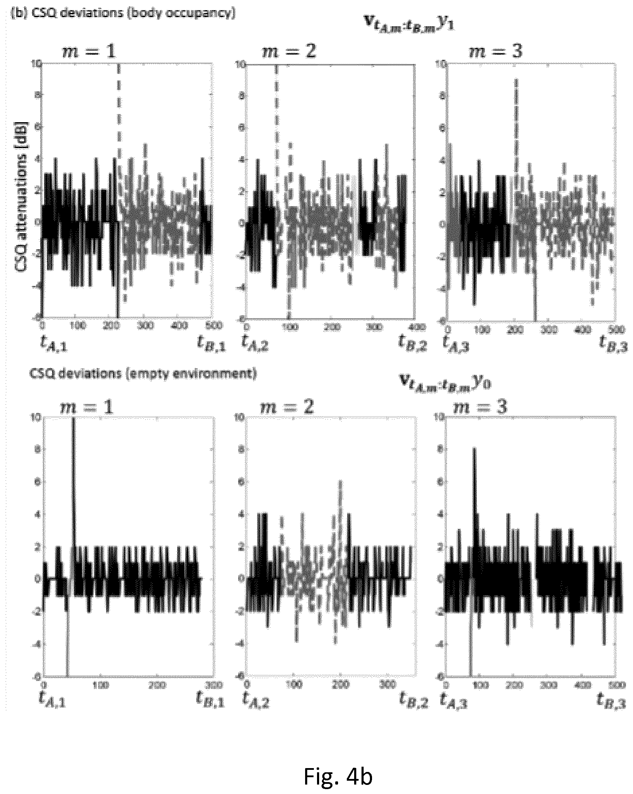

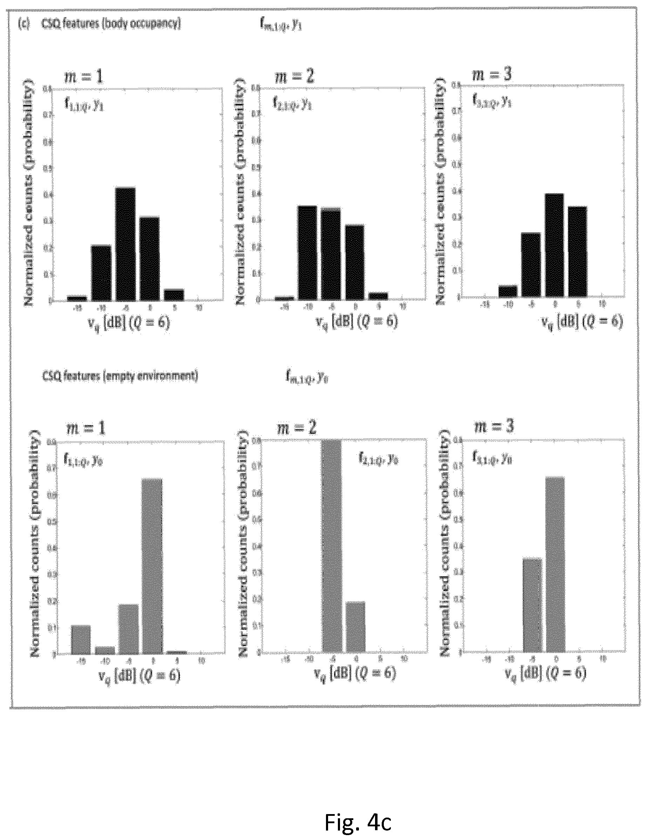

Figure 4 shows (a) three examples of anomalous CSQ data sequences extracted from the user equipment for occupancy conditions (upper figures) and non-occupancy conditions of environments; (b) the corresponding deviations $v_{t_B,m:t_A,m}$. (c) six-class histograms of normalized CSQ.

In order to distinguish whether am anomalous sequence of CSQ data depends on the presence of a body in proximity of the user equipment, or whether, on the contrary, it depends on other factors, the remote service center compares the received anomalous sequences with the stored profiles or with other data collected from other user equipment in adjacent positions.

For example if all user equipment connected to a cell transmit the same anomalous sequence of CSQ data substantially at the same time moment then it is reasonable to believe that such a sequence is due to factors that can be attributed to the cell, such as a reduction of the power transmitted by the transmitter, that have nothing to do with the presence of a person in proximity of the user equipment.

The remote service center 5 therefore compares the anomalous sequences with locally stored data and transmits to the user equipment 3 a body detection signal. The user equipment therefore reacts to the detection signal by activating specific functions. For example the user equipment 3 may be provided with a software application that, upon the reception of the detection signal, activates a visual or sound alarm. Otherwise the service center sends warning signals to other user equipment or other software applications.

In one embodiment the remote service center 5 uses the anomalous sequences coming from one or more user equipment 3 to improve the detection ability and possibly to update estimation models.

In the light of the above it is clear how the system and method described above allow the above mentioned objects to be achieved allowing the presence of a body/person to be detected in proximity of a user equipment of a cellular wireless network without the need of modifying or complicating too much the network or the user equipment. The detection system and method can operate by using detections that the user equipment has to perform such to operate inside the cellular wireless network, for example to perform the cell reselection process.

It is also clear that the above mentioned embodiments have not to be intended as a limitation, where the scope of protection of the invention on the contrary is defined by the annexed claims. Many variants are therefore possible.

For example the remote service center 5 can be composed of a single remote server or a computer network, for example a cloud or cloud server, that carries out the functions of the system and the steps of the method described above. Moreover except for the measurement of the power of broadcast signals transmitted from radio stations of the network, the various steps of the method detecting the motion of bodies in proximity of user equipment in a cellular wireless network, can be implemented indifferently in the user equipment or remote service center with advantages and disadvantages depending on the particular case.

For example in one embodiment alternative to the one described above the user equipment can autonomously select the anomalous sequences according to formulas (1) to (6) described above by using a detection threshold ho provided, e.g. periodically, by the remote service center. Therefore anomalous sequences can be compared with the model describing the trend over time of anomalous sequences of CSQ data in order to find anomalous sequences that correspond to events resulting from the movement of bodies in proximity of the user equipment. If the user equipment has enough computational power and battery autonomy, then also such comparison can be carried out locally.

Therefore in one embodiment the remote service center collects the parameters and the cell identification codes transmitted by the user equipment and, after processing them, sends to the user equipment detection information necessary to define one or more anomalous sequences of data to be compared with the statistical model/models and/or about parameters of the statistical model/models.

Particularly the remote service center processes the parameters received by a plurality of user equipment connected to the cellular wireless network, updates the statistical model/models by calculating again the parameters and transmits to the user equipment detection information. As a response to the reception of such detection information from the remote service center, the user equipment is configured for updating at least one datum stored in one memory area thereof and for using the stored datum for following implementations of the detection method. For example the user equipment can be configured for updating the detection threshold ho or a parameter of the statistical model used by the user equipment for detecting the motion.

**Claims**

1. Method for detecting the motion of bodies (2) in proximity of a user equipment (3) in a wireless cellular network (4), wherein

   - by means of a user equipment (3)

     ◦ broadcast signals transmitted from radio stations (40) of the network (4) and containing a cell identification code (CID) are received, and
     ◦ for each received broadcast signal the power of the received broadcast signal is measured and a parameter, indicating the quality of the received signal, corresponding or derived from the power of the received broadcast signal is calculated;

   - parameters (CSQ) calculated for the broadcast signals having the same cell identification code (CID) are collected, in sequences of data;
   - one or more of the collected sequences of data are compared with one or more statistical models describing the trend over time of said sequences of data;
   - depending on the comparison, a parameter indicative of the presence of a body in proximity of the user equipment is determined.

**2.** Method according to claim 1, wherein the user equipment (3) transmits to a remote service center (5), outside said cellular wireless network (4), the parameters calculated for the received broadcast signals and the related cell identification codes, and wherein the remote service center (5) collects the parameters and the cell identification codes transmitted from the user equipment and, after processing them, sends to the user equipment (3) detection information necessary to define said one or more sequences of data to be compared with said one or more statistical models and/or information about parameters of said one or more statistical models.

**3.** Method according to any of the preceding claims, wherein the remote service center (5) processes the parameters received by a plurality of user equipment connected to said cellular wireless network (4), updates said one or more statistical models and transmits to said user equipment (3) detection information.

**4.** Method according to claim 2 or 3, wherein as a response to the reception of said detection information from the remote service center (5), the user equipment (3) is configured for updating at least one datum stored in one memory area of the user equipment (3) and for using the stored datum for following implementations of the detection method.

**5.** Method according to claim 2 or 3 or 4, wherein the user equipment (3) periodically sends the parameters to the remote service center (5).

**6.** Method according to claim 2 or 3 or 4, wherein the user device (3)

(v) receives a first broadcast signal with a first cell identification code;
(vi) calculates a first parameter indicating the quality of the first received broadcast signal and
(vii) compares the first parameter with an earlier parameter stored in a memory area of the user equipment (3), said earlier parameter being a parameter indicating the quality of a second broadcast signal received before said first broadcast signal and having same cell identification code;
(viii) transmits to the remote service center (5) the first parameter indicating the quality of the first broadcast signal if the first parameter differs from the second parameter beyond a predetermined tolerance threshold.

**7.** Method according to any of the preceding claims, wherein the parameter (CSQ) indicating the quality of a broadcast signal is a parameter that the user equipment (3) calculates in order to implement a cell reselection procedure in said cellular wireless network (4).

**8.** Method according to any of the preceding claims, further comprising the step of updating said one or more statistical models by using information received from one or more user equipment.

**9.** Method according to any of the preceding claims, wherein anomalous sequences of data are selected and wherein a comparison is made only between selected anomalous sequences of data and models of sequences of data representing movements in proximity of user equipment.

**10.** Method according to claim 9, wherein the anomalous sequences of data are sequences of data that are different from an expected statistical behavior.

**11.** Method according to claim 9 or 10, wherein the service center (5) uses the anomalous sequences of data coming from further user equipment for distinguishing anomalous sequences of data due to the motion of bodies in proximity of said user equipment (3) from anomalous sequences of data due to other factors.

**12.** Method according to claim 9 or 10 or 11, wherein for each sequence of data, the cumulative sum of the likelihood ratios gt is calculated which is defined as

$$g_t = \frac{1}{T} \sum_{j=t-T}^{t} \left( \ell_j \right)^+$$

Where $( \blacksquare )^+ = \max[0, \blacksquare]$ and $\ell_j$ are the terms of the likelihood ratios calculated as

$$\ell_j \approx v u_1^T \times z_j\left(\theta_{0,k}\right)$$

Where $v>0$ and $u_1$ is a unit vector indicating any previous information of the predominant direction of the change that gives a greater impact on perturbations of parameters of the model, and wherein $z_j(\theta_{0,k})$ is a score function defined as

$$z_j\left(\theta_{0,k}\right) = \left[\frac{1}{\sigma_k^2} v_{j,k} s_{j-1;j-q}, \frac{1}{\sigma_k}\left(\frac{v_{t,k}^2}{\sigma_k^2} - 1\right)\right]$$

where for each user equipment connected to the cell k $v_{j,k}$ is defined as

$$v_{j,k} = [1, -b_k^T] \times s_{j;j-q} - r_k$$

Where $s_{t,k}\left(\theta_{0,k}\right) = b_k^T \times s_{t-1:t-p-1} + v_{t,k} + r_k,$ T is the duration of the observation, vector $b_k$ with dimension p x 1 contains the specific autoregressive parameters of the cell, $r_k$ describes the static component of CSQ measured by the user equipment (3) when connected to the cell k and where the residual fluctuations $v_{t,k}$ are represented by a normal distribution with mean 0 and deviation $\sigma_k$, and wherein start and end of the anomalous sequence are estimated as

$$t_A = min\{t: g_t \geq h_0\}$$
$$t_B = min\{t > t_A + T: g_t \geq h_0\}$$

where $t_A$ is the start of the anomalous sequence and $t_B$ the end thereof and ho is a predetermined detection threshold.

13. Method according to any of the preceding claims, wherein said one or more models describing the trend over time of said sequences of data comprise a model of the *bag-of words* type.

Fig.1

```
┌─────────────────────────────────┐
│     Receiving signals with CID   │ ⟿ 200
└─────────────────────────────────┘
                 │
                 ▼
┌─────────────────────────────────┐
│      Measuring signal power      │ ⟿ 201
└─────────────────────────────────┘
                 │
                 ▼
┌─────────────────────────────────┐
│    Calculating cell signal quality │ ⟿ 202
└─────────────────────────────────┘
                 │
                 ▼
┌─────────────────────────────────┐
│   Transmitting CSQ data and CID  │ ⟿ 203
│   to remote server               │
└─────────────────────────────────┘
                 │
                 ▼
┌─────────────────────────────────┐
│    Selecting anomalous sequences │ ⟿ 204
└─────────────────────────────────┘
                 │
                 ▼
┌─────────────────────────────────┐
│     Comparing with the model     │ ⟿ 205
└─────────────────────────────────┘
                 │
                 ▼
┌─────────────────────────────────┐
│         Detecting motion         │ ⟿ 206
└─────────────────────────────────┘
```

Fig. 2

**Fig. 3**

Fig. 4a

Fig. 4b

Fig. 4c

Europäisches
Patentamt

European
Patent Office

Office européen
des brevets

# EUROPEAN SEARCH REPORT

Application Number

EP 17 16 0453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/200856 A1 (WILSON ANTHONY JOSEPH [US] ET AL) 17 July 2014 (2014-07-17) | 2-11,13 | INV.<br>G01S11/02 |
| Y | * paragraphs [0014] - [0019] *<br>* paragraphs [0023] - [0054] *<br>* paragraphs [0057], [0058], [0068], [0075] - [0078] *<br>* paragraphs [0083] - [0095] *<br>----- | 1 | G01S5/02<br>G01S5/00 |
| Y | US 2016/077190 A1 (JULIAN BRIAN JOHN [US]) 17 March 2016 (2016-03-17)<br>* paragraphs [0093] - [0097] *<br>----- | 1 | |
| Y | WO 2016/176670 A1 (MIST SYSTEMS INC [US]) 3 November 2016 (2016-11-03)<br>* paragraphs [0084], [0085], [0178] - [0190] *<br>----- | 1 | |
| Y | US 2009/286549 A1 (CANON STEPHEN TYRONE [US] ET AL) 19 November 2009 (2009-11-19)<br>* paragraphs [0065] - [0074] *<br>----- | 1 | |
| | | | TECHNICAL FIELDS SEARCHED (IPC)<br><br>G01S<br>G08B |

The present search report has been drawn up for all claims

| Place of search | Date of completion of the search | Examiner |
|---|---|---|
| Munich | 7 September 2017 | Naddeo, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 16 0453

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2017

| Patent document cited in search report | Publication date | Patent family member(s) | Publication date |
|---|---|---|---|
| US 2014200856 A1 | 17-07-2014 | CA 2820947 A1 <br> EP 2652996 A1 <br> US 2012146788 A1 <br> US 2014200856 A1 <br> US 2017131125 A1 <br> WO 2012082758 A1 | 21-06-2012 <br> 23-10-2013 <br> 14-06-2012 <br> 17-07-2014 <br> 11-05-2017 <br> 21-06-2012 |
| US 2016077190 A1 | 17-03-2016 | NONE | |
| WO 2016176670 A1 | 03-11-2016 | US 2016323717 A1 <br> WO 2016176670 A1 | 03-11-2016 <br> 03-11-2016 |
| US 2009286549 A1 | 19-11-2009 | CN 102066969 A <br> EP 2286264 A1 <br> JP 5739327 B2 <br> JP 2011525234 A <br> KR 20110019373 A <br> US 2009286549 A1 <br> WO 2009140031 A1 | 18-05-2011 <br> 23-02-2011 <br> 24-06-2015 <br> 15-09-2011 <br> 25-02-2011 <br> 19-11-2009 <br> 19-11-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100026470 A
- WO 2012082758 A
- WO 2014004464 A

**Non-patent literature cited in the description**

- **K. WOYACH ; D. PUCCINELLI ; M. HAENGGI.** Sensorless Sensing in Wireless Networks: Implementation and Measurements. *Proc. of 4th International Symposium on Modeling and Optimization in Mobile, Ad Hoc and Wireless Networks,* 03 April 2006, 1-8
- **S. SAVAZZI ; S. SIGG ; M. NICOLI ; V. RAMPA ; S. KIANOUSH ; U. SPAGNOLINI.** Device-Free Radio Vision for assisted living: leveraging wireless channel quality information for human sensing. *IEEE Signal Processing Magazine,* March 2016, vol. 33 (2), 45-58
- **N. PATWARI ; J. WILSON ; RF SENSOR.** Device-Free localization: measurements, models and algorithms. *Proc. of the IEEE,* 11 November 2010, vol. 98
- **M. SEIFELDIN ; A. SAEED ; A. KOSBA ; A. EL-KEYI ; M. YOUSSEF ; NUZZER, A.** Large-Scale Device-Free Passive Localization System for Wireless Environments. *IEEE Trans. Mobile Computing,* vol. 12 (7), 1321-1334
- **A. SAEED ; A.E. KOSBA ; M. YOUSSEF ; ICHNAEA.** A Low-Overhead Robust WLAN Device-Free Passive Localization System. *IEEE J. Sel. Topics in Signal Proc.,* February 2014, vol. 8 (1), 5-15
- **S. SAVAZZI ; M. NICOLI ; F. CARMINATI ; M. RIVA.** A Bayesian approach to Device-Free Localization: modelling and experimental assessment. *IEEE J. Sel. Topics in Signal Proc.,* February 2014, vol. 8 (1), 16-29
- **Y. MOSTOFI.** Cooperative wireless-based obstacle/object mapping and see-through capabilities in robotic networks. *IEEE Trans. On Mobile Computing,* May 2013, vol. 12 (5
- **Y. WANG ; J. LIU ; Y. CHEN ; M. GRUTESER ; J. YANG ; H. LIU.** E-eyes: Device-free Location-oriented Activity Identification Using Fine-grained WiFi Signature. *Proc. of the 20th annual international conference on Mobile computing and networking,* 2014, 617-628
- **S. SIGG ; M. SCHOLZ et al.** RF-Sensing of Activities from Non-Cooperative Subjects in Device-Free Recognition Systems Using Ambient and Local Signals. *IEEE Trans. on Mobile Computing,* April 2014, vol. 13 (4), 907-920
- Universal Mobile Telecommunication System: User Equipment (UE) procedures in idle mode and procedures for cell reselection in connected mode. *3GPP TS 25.304,* November 2011
- Evolved Universal Terrestrial Radio Access (EUTRA); User Equipment (UE) procedures in idle mode. *3GPP TS 36.304,* January 2016
- **K. E. BADDOUR ; N. C. BEAULIEU.** Autoregressive modeling for fading channel simulation. *IEEE Trans. on Wireless Communications,* July 2005, vol. 4 (4